# FASCICULE DE BREVET EUROPEEN

(11) **EP 1 741 176 B1**
(45) Date de publication et mention de la délivrance du brevet: **03.04.2013**
(21) Numéro de dépôt: 05767468.1
(22) Date de dépôt: 27.04.2005
(51) Int. Cl.: H02K 9/06

(54) **ALTERNATEUR POUR VEHICULE AUTOMOBILE**
GENERATOR FÜR EIN FAHRZEUG
ALTERNATOR FOR A MOTOR VEHICLE

(30) Priorité: 30.04.2004 FR 0404662
(43) Date de publication de la demande: 10.01.2007
(73) Titulaire: VALEO EQUIPEMENTS ELECTRIQUES MOTEUR, 94017 Créteil Cedex (FR)
(72) Inventeur: FAKES, Michel, F-59113 Seclin (FR)
(74) Mandataire: de Lambilly Delorme, Marie Pierre
(86) Numéro de dépôt international: PCT/FR2005/001039
(87) Numéro de publication internationale: WO 2005/117241

(56) Documents cités:
- US-A- 5 710 467
- US-B1- 6 417 594

## Description

L'invention concerne une machine électrique tournante, telle qu'un alternateur de véhicule automobile, et un moyen de cache pour une telle machine.

De telles machines électriques comprennent généralement un dispositif de circulation forcée d'un fluide de refroidissement, un stator et un rotor qui sont logés dans un carter pourvu d'un palier avant et d'un palier arrière. L'un au moins des deux paliers comprend une face frontale et une jupe sensiblement cylindrique, cette jupe ayant une extrémité ouverte et une extrémité fermée par la face frontale. Ce palier comprend des ouvertures d'admission d'air frais réalisées dans la face frontale, et des fentes de refoulement d'air chaud. Chaque fente de refoulement comprend une partie axiale s'étendant dans la jupe et une partie radiale s'étendant dans une zone périphérique de la face frontale.

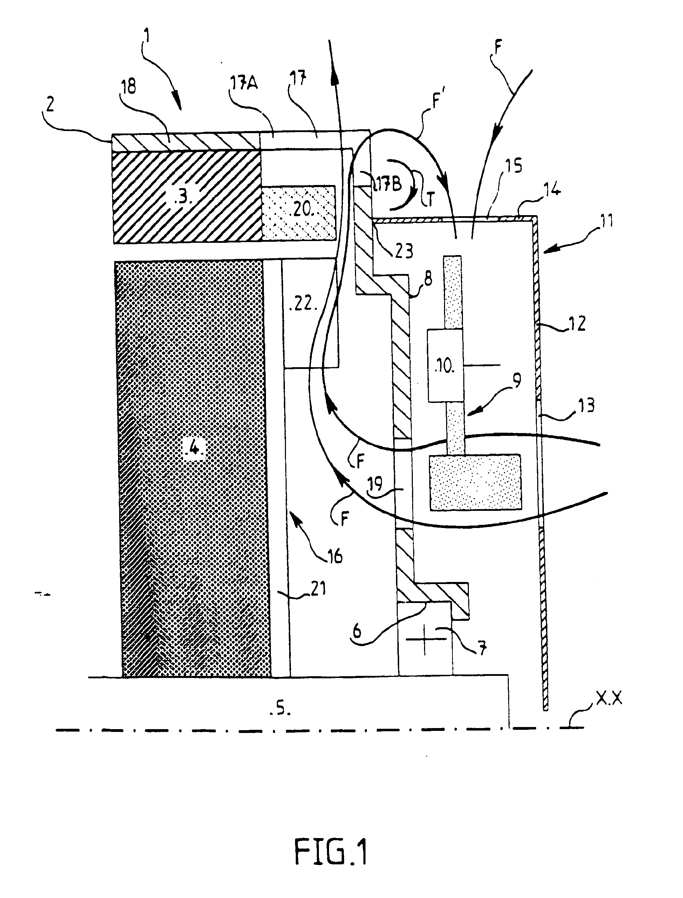

Un tel alternateur, qui est par exemple décrit par le document EP-A-0740400, comprend un palier avant et un palier arrière similaires qui délimitent un carter en étant fixés directement l'un à l'autre. Dans la figure 1, on a représenté l'arrière d'un tel alternateur dans une vue en coupe partielle montrant le palier arrière qui est repéré par la référence 1.

Comme visible dans cette figure, le carter de cet alternateur renferme un stator 3 entourant un rotor 4, qui est solidaire d'un axe ou arbre 5. Cet axe 5 qui s'étend selon une direction longitudinale XX de l'alternateur est supporté par un roulement à bille 7 monté dans un logement correspondant 6 qui est réalisé au centre de la face frontale 8 du palier arrière. Le stator 3 présente un corps comportant des bobinages traversant le corps que présente le stator. Les bobinages s'étendent de part et d'autre du corps du stator pour formation de chignons dont l'un est visible en 20 à la figure 1.

Le palier arrière 1, supporte du côté extérieur de sa face frontale 8 plusieurs organes électroniques constituant notamment un dispositif de redressement 9. Ce dispositif de redressement 9 est ici un pont de diodes 10 qui convertit le courant alternatif produit par les bobinages du stator en un courant continu.

Le dispositif de redressement 9 est recouvert par un capot 3.1 comprenant un fond 12 muni d'ouïes frontales 13, et une paroi 14 latérale sensiblement cylindrique munie dans un mode de réalisation d'ouïes latérales 15. L'extrémité de la paroi cylindrique 14 qui est opposée au fond 12 définit un bord circulaire 23 qui est en appui contre la face frontale 8 du palier arrière 1.

Le refroidissement de cet alternateur est assuré par un ventilateur interne 16 situé à l'intérieur du palier arrière 1, concentriquement à la jupe 18 qui l'entoure. Ce ventilateur 16 comprend un plateau circulaire 21 accolé à une extrémité du rotor 4 ici à griffes, dont il est solidaire, ce plateau circulaire portant des pales 22 qui sont situées sensiblement au droit de la jupe 18.

Le ventilateur 16 aspire de l'air frais axialement à travers les ouïes 13 et 15 du capot 11 pour que cet air refroidisse le pont de diodes 10. Cet air traverse ensuite la face frontale 8 du palier arrière 1 par des ouvertures d'admission 19, pour être refoulé radialement à travers des fentes de refoulement 17, par les pales 22 du ventilateur 16.

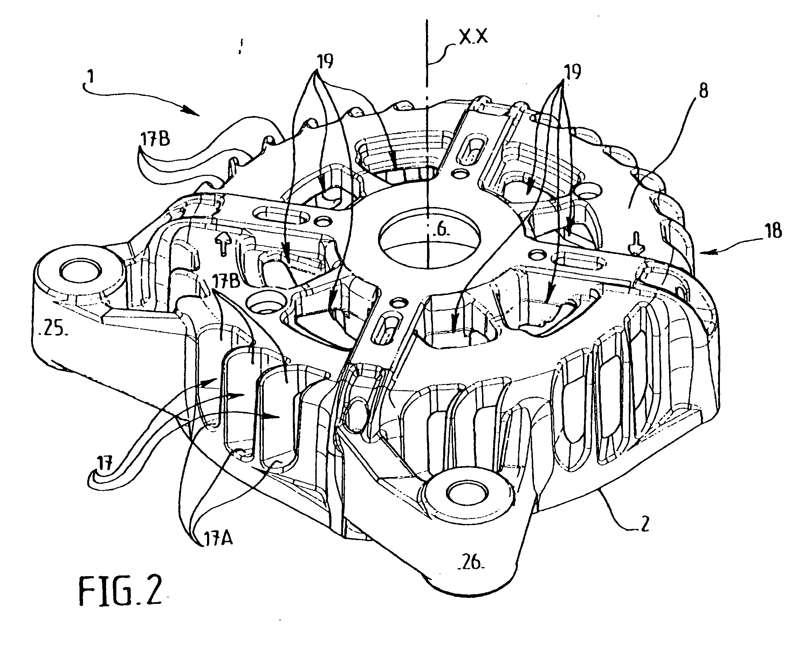

Le palier arrière 1 qui apparaît sur la figure 1 en coupe avec les autres éléments de l'alternateur est représenté seul en perspective sur la figure 2. Ce palier a une forme générale creuse de révolution, tout en comprenant deux protubérances 25 et 26 qui s'étendent radialement par rapport à la jupe 18 et qui forment deux pattes de fixation sur une partie fixe du véhicule.

Les fentes de refoulement 17 comprennent chacune une partie axiale 17A s'étendant dans la direction axiale de la machine, et une partie radiale 17B s'étendant dans une zone annulaire périphérique de la face frontale 8 du palier arrière 1.

L'air qui est évacué à travers les fentes 17 refroidit également des chignons 20 du stator qui longent la surface interne de la jupe 18 notamment au niveau des fentes de refoulement 17.

Les lignes de courant de l'air de refroidissement sont représentées de façon symbolique par les flèches F, F' et T sur la figure 1.

Selon cette disposition, les parties radiales 17B des fentes de refoulement 17 qui sont prévues pour permettre la fabrication par moulage du palier sont préjudiciables au refroidissement. En effet, elles génèrent d'une part des tourbillons T dans l'écoulement de l'air de refoulement ce qui introduit des pertes de charge, et d'autre part, de l'air refoulé F' est aspiré à travers les ouvertures radiales 15 et/ou des ouïes 13 du capot avec de l'air frais.

Dans le document US-A-5,710,467, comme visible dans les figures 1 et 4, une partie de l'air est refoulée vers l'arrière et peut donc recirculer à travers les ouvertures d'entrée du capot.

Dans l'alternateur qui est connu du brevet EP0740400, la question de la recirculation et des tourbillons dus aux parties radiales des fentes de refoulement est traitée au moyen d'un anneau plat qui entoure le palier arrière. Cet anneau constitue une cloison qui sépare l'air chaud évacué par les fentes de refoulement de l'air froid aspiré par les ouïes du capot.

Cette solution est adaptée à un alternateur monté dans un logement complémentaire du groupe motopropulseur du véhicule, le bord externe de l'anneau étant en appui au jeu de montage près contre ce logement pour constituer une cloison étanche qui sépare les fentes de refoulement des ouïes du capot.

Cet anneau est conformé pour épouseur la forme du logement correspondant dans l'espace moteur où est monté l'alternateur.

Cependant, l'augmentation des besoins électriques des véhicules automobiles conduit à des alternateurs qui doivent produire une puissance électrique de plus en plus élevée, ce qui génère une quantité de chaleur nécessitant des améliorations importantes de leur refroidissement. En même temps, les moteurs thermiques auxquels ces alternateurs sont destinés, sont de plus en plus compacts et ne permettent pas d'augmentation du volume de ces machines.

Le but de l'invention est donc d'améliorer le refroidissement d'un alternateur comprenant un palier tel que le palier arrière décrit ci-dessus, sans modifier la conception de ce palier.

Le but de l'invention est par ailleurs de proposer une solution pour améliorer le refroidissement de l'alternateur moyennant un surcoût de fabrication et un encombrement supplémentaire les plus faibles possibles.

### Résumé de l'invention

A cet effet, l'invention a pour objet une machine électrique tournante, telle qu'un alternateur de véhicule automobile, cette machine incluant un dispositif de circulation forcée d'un fluide de refroidissement, un stator et un rotor qui sont logés dans un carter pourvu d'un palier avant et d'un palier arrière, l'un au moins des deux paliers comprenant une face frontale et une jupe sensiblement cylindrique, cette jupe ayant une extrémité ouverte et une extrémité fermée par la face frontale, des ouvertures d'admission d'air frais réalisées dans la face frontale, des fentes de refoulement d'air chaud, chaque fente de refoulement comprenant une partie axiale s'étendant dans la jupe et une partie radiale s'étendant dans une zone périphérique de la face frontale,

la machine comprenant au moins un moyen d'obturation qui bouche au moins une partie radiale de fente.

Selon l'invention, le moyen d'obturation comprend au moins une extension, chaque extension ayant une forme complémentaire d'une partie radiale de fente correspondante pour s'engager dans une partie radiale de fente correspondante.

Selon un mode particulier de réalisation de l'invention, chaque extension a une épaisseur suffisante pour combler la partie radiale de fente qu'il obture sur toute l'épaisseur de cette partie radiale de fente, de manière à constituer une surface interne du palier qui est continue dans la zone obturée.

Avantageusement, au moins une extension du moyen d'obturation constitue un ergot apte à s'encliqueter dans une partie radiale de fente correspondante pour à la fois obturer cette partie radiale de fente et assurer la fixation du moyen d'obturation au palier.

Selon un mode particulier de réalisation de l'invention, le moyen d'obturation est formé par un anneau fixé à la face frontale du palier.

Selon un mode particulier de réalisation de l'invention, la machine comprend un capot recouvrant le palier, et le moyen d'obturation fait partie du capot qu'il prolonge.

Selon un mode particulier de réalisation de l'invention, la machine comprend plusieurs moyens d'obturation, chaque moyen d'obturation formant un bouchon qui se bloque dans une partie radiale de fente par encliquetage.

Selon un mode particulier de réalisation de l'invention, le moyen d'obturation est réalisé en matière plastique.

Selon un mode particulier de réalisation de l'invention, le moyen d'obturation est fixé au palier par des tirants ou par des vis.

L'invention concerne également un moyen d'obturation pour une machine électrique tournante, telle qu'un alternateur de véhicule automobile, cette machine incluant un dispositif de circulation forcée d'un fluide de refroidissement, un stator et un rotor qui sont logés dans un carter pourvu d'un palier avant et d'un palier arrière, l'un au moins des deux paliers comprenant une face frontale et une jupe sensiblement cylindrique, cette jupe ayant une extrémité ouverte et une extrémité fermée par la face frontale, des ouvertures d'admission d'air frais réalisées dans la face frontale, des fentes de refoulement d'air chaud, chaque fente de refoulement comprenant une partie axiale s'étendant dans la jupe et une partie radiale s'étendant dans une zone périphérique de la face frontale.

Selon l'invention, le moyen d'obturation comprend au moins une extension prévue pour boucher au moins une partie radiale de fente chaque extension ayant une forme complémentaire d'une partie radiale de fente de refoulement correspondante du palier pour s'engager dans une partie radiale de fente correspondante.

### Brève description des figures

L'invention sera maintenant décrite plus en détail, et en référence aux dessins annexés qui en illustrent une forme de réalisation à titre d'exemple non limitatif.
- La figure 1 est une vue en coupe d'un d'alternateur de l'art antérieur ;
- La figure 2 est une vue d'ensemble en perspective d'un palier arrière d'alternateur fabriqué par moulage axial utilisé dans l'art antérieur et dans l'invention ;
- La figure 3 est une vue en coupe d'un alternateur équipé d'un premier moyen d'obturation selon l'invention ;
- La figure 4 est une vue en coupe d'un alternateur équipé d'un second moyen d'obturation selon l'invention.

### Description détaillée d'un exemple de réalisation de l'invention

La structure générale d'un alternateur, constituant une machine électrique tournante, ayant déjà été décrite dans la partie introductive, de façon globale, on ne décrira ci-après que les aspects qui sont directement en relation avec l'invention.

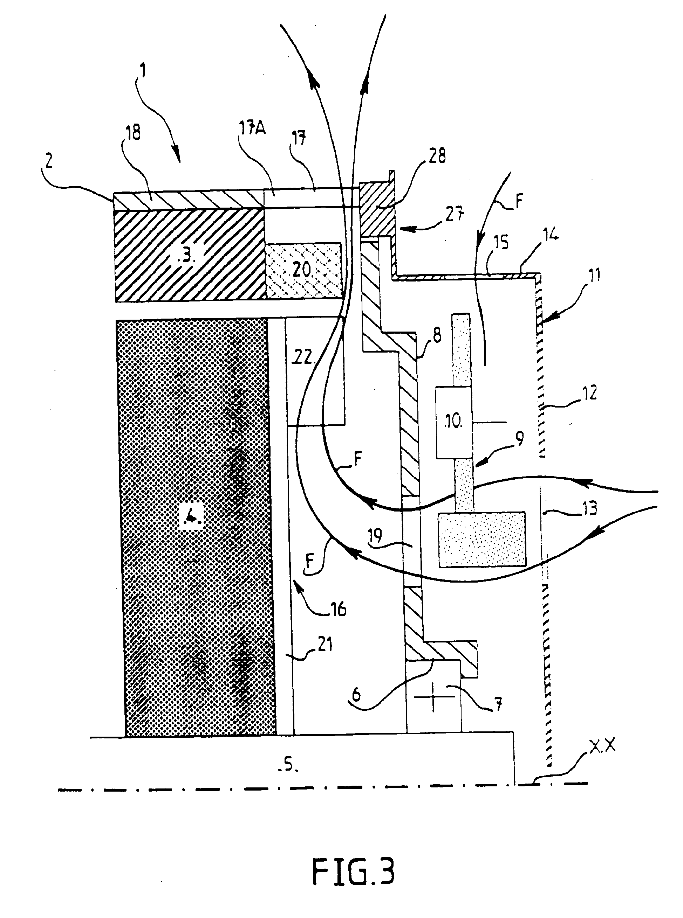

Selon l'invention, la machine électrique tournante comprend au moins un moyen d'obturation 27 qui bouche au moins une partie radiale 17B de fente. A la figure 3, les parties radiales 17B des fentes de refoulement 17 dans la face frontale 8 du palier arrière 1 sont bouchées par un moyen d'obturation 27. Grâce à ce moyen d'obturation, les parties radiales 17B des fentes 17 n'évacuent pas d'air, ce qui évite de générer des tourbillons T, et empêche l'air chaud F de recirculer dans l'alternateur.

Les parties radiales 17B peuvent être bouchées soit par plusieurs moyens d'obturation 27 indépendants fixés au palier arrière 1, soit par un moyen d'obturation 27 unique faisant éventuellement partie du capot 11 ici en matière plastique.

Dans le mode de réalisation représenté sur la figure 3, le moyen d'obturation 27 a une forme globalement annulaire et fait partie du capot 11. Il constitue une surface annulaire globalement plane perpendiculaire à la jupe 14 du capot 11 qu'il prolonge radialement au niveau du bord circulaire de l'extrémité libre de cette paroi cylindrique.

Ce moyen d'obturation 27 comprend plusieurs extensions repérées par 28 sur les figures, qui s'engagent à l'intérieur des parties radiales de fentes 17B correspondantes qu'elles obturent.

Avantageusement, ces extensions 28 ont une épaisseur suffisante pour combler la partie radiale 17B de fente qu'elles obturent sur toute sa profondeur. Les extensions comblent ainsi les parties radiales des fentes 17B de manière à obtenir une surface interne du palier arrière 1 qui est continue aussi au niveau des parties obturées par les extensions 28.

Cette surface interne est ainsi apte à diriger le flux d'air évacué par le ventilateur 16, selon une direction la plus radiale possible pour éviter que cet air ne puisse être aspiré par les ouïes 13, 15, et ce, en introduisant le moins de perte de charge possible, grâce à la suppression des turbulences, plus précisément des refoulements d'air tourbillonnants.

Avantageusement la surface interne du palier arrière avec les parties obturées par les extensions 28 est conique de manière à diriger le flux d'air évacué par le ventilateur 16 vers l'avant de l'alternateur, c'est-à-dire dans une direction sensiblement opposée aux ouïes 13, 15.

Les extensions 28 peuvent avantageusement avoir des formes complémentaires de la forme interne des extrémités de fentes 17B qu'elles bouchent de manière à se bloquer dans celle-ci par encliquetage pour assurer également la fixation du moyen d'obturation 27 et du capot 11 sur le palier arrière 1.

Selon cette particularité, une ou plusieurs extension 28 du moyen d'obturation 27 constituent à la fois un obturateur bouchant une partie radiale 17B de fente 17, et un ergot de fixation du moyen d'obturation 27 et du capot au palier arrière 1.

Eventuellement, chaque partie radiale 17B de fente peut être fermée par un moyen d'obturation qui lui est propre, chaque moyen d'obturation étant alors un bouchon qui se bloque dans cette partie radiale de fente 17B grâce à sa forme complémentaire.

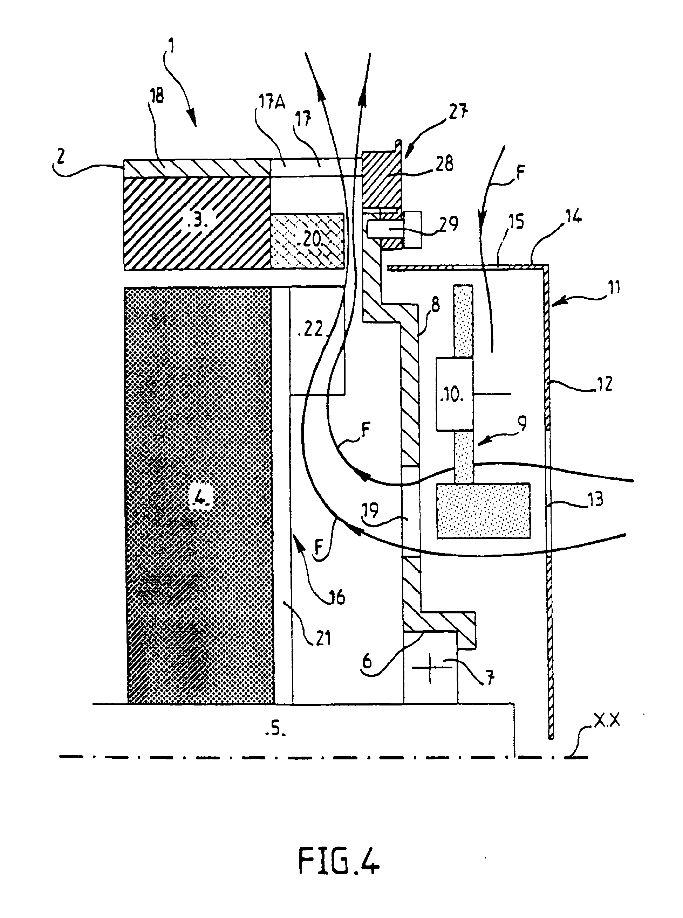

Dans le mode de réalisation représenté sur la figure 4, le moyen d'obturation 27 est formé par une pièce indépendante pouvant être réalisée en matière plastique, qui est fixée au palier arrière 1 par une ou plusieurs vis repérées par 29. Ces vis 29 traversent le moyen d'obturation 27 qui a globalement une forme annulaire et qui entoure un bord circulaire du capot 11, en étant vissées dans des filetages correspondants réalisés dans la face frontale 8 du palier arrière 1.

Le moyen d'obturation 27 peut être fixé au palier arrière 1 par tout autre moyen approprié, comme par exemple par des tirants, par collage ou encore par fixation à un autre élément de l'alternateur tel que le capot 11.

De même que dans le mode de réalisation de la figure 3, le moyen d'obturation 27 comprend des extensions 28 ayant des formes complémentaires de l'intérieur des parties radiales 17B des fentes 17 pour diriger le flux d'air chaud expulsé par le ventilateur 16 selon une direction inscrite dans un plan radial afin de réduire le plus possible le risque de rebouclage de cet air chaud et de tourbillons.

Ainsi, l'invention permet d'améliorer le refroidissement d'un alternateur sans nécessiter de modifier la forme ni la technique de moulage du palier arrière 1 qu'il comprend.

Le moyen d'obturation 27 est avantageusement réalisé en matière plastique moulée, de sorte que son coût de fabrication en soi est très faible. Il peut de plus être réalisé sous forme d'une pièce rapportée indépendante destinée à être fixée au palier arrière 1, de sorte qu'il peut être adapté à un palier arrière existant, sans qu'il ne soit nécessaire de modifier ni le palier arrière 1, ni le capot 11 de ce palier.

Dans les modes de réalisation décrits plus haut et représentés sur les figures, l'invention est appliquée à un palier arrière d'alternateur, sur lequel est monté le dispositif de redressement 9 qui constitue la partie la plus chaude de l'alternateur.

Mais l'invention s'applique également au palier avant d'un alternateur qui ne supporte pas nécessairement de dispositif de redressement, mais qui peut néanmoins avoir une forme très similaire, et dont le refroidissement doit également être optimal. Dans ce cas, comme à la figure 3, le moyen d'obturation peut faire partie d'un déflecteur ayant la forme du capot 11 dépourvu alors du fond 17.

L'invention s'applique également au cas d'un alternateur dans lequel l'un des paliers est refroidi par eau, et l'autre par air. Le carter de l'alternateur peut comporter plus de deux parties, par exemple trois parties, à savoir un palier avant, un palier arrière et une partie intermédiaire implantée entre les deux paliers et fixée à ceux-ci, par exemple par vissage.

L'invention s'applique par ailleurs aux machines électriques tournantes pourvues de manière générale d'un convertisseur de courant, qu'il s'agisse d'un redresseur comme dans les modes de réalisation présentés plus haut, ou d'un dispositif de type hacheur ou onduleur, ce qui correspond par exemple au cas d'un alterno-démarreur auquel s'applique également l'invention. Bien entendu, en variante, certaines des fentes sont dotées d'un moyen d'obturation qui ferme au moins une partie radiale 17B de fente 17.

On appréciera que l'encombrement radial de l'alternateur selon l'invention est réduit par rapport notamment à celui document EP-A-O740400 et que la solution est simple et économique.

## Revendications

1. Machine électrique tournante, telle qu'un alternateur de véhicule automobile, cette machine incluant un dispositif de circulation forcée (16) d'un fluide de refroidissement, un stator (3) et un rotor (4) qui sont logés dans un carter pourvu d'un palier avant et d'un palier arrière (1), l'un au moins des deux paliers (1) comprenant une face frontale (8) et une jupe (18) sensiblement cylindrique, cette jupe (18) ayant une extrémité ouverte et une extrémité fermée par la face frontale (8), des ouvertures (19) d'admission d'air frais réalisées dans la face frontale (8), des fentes (17) de refoulement d'air chaud, chaque fente de refoulement comprenant une partie axiale (17A) s'étendant dans la jupe (18), une partie radiale (17B) s'étendant dans une zone périphérique de la face frontale (8), la machine comprenant et au moins un moyen d'obturation (27) qui bouche au moins une partie radiale (17B) de fente (17) **caractérisée en ce que** le moyen d'obturation (27) comprend au moins une extension (28), chaque extension ayant une forme complémentaire d'une partie radiale (17B) de fente (17) correspondante pour s'engager dans une partie radiale (17B) de fente (17) correspondante.

2. Machine selon la revendication 1, **caractérisée en ce que** chaque extension (28) a une épaisseur suffisante pour combler la partie radiale de fente (17B) qu'il obture sur toute l'épaisseur de cette partie radiale de fente (17B), de manière à constituer une surface interne du palier (1) qui est continue dans la zone obturée.

3. Machine selon la revendication 1 ou 2, **caractérisée en ce qu'**au moins une extension (28) du moyen d'obturation constitue un ergot apte à s'encliqueter dans une partie radiale (17B) de fente correspondante (17) pour à la fois obturer cette partie radiale (17B) de fente et assurer la fixation du moyen d'obturation (27) au palier (1).

4. Machine selon l'une quelconque des revendications précédentes, **caractérisée en ce que** le moyen d'obturation (27) est formé par un anneau fixé à la face frontale (8) du palier (1).

5. Machine selon l'une quelconque des revendications précédentes, comprenant un capot (11) recouvrant le palier (1), **caractérisée en ce que** le moyen d'obturation (27) fait partie du capot (11) qu'il prolonge.

6. Machine selon l'une quelconque des revendications précédentes, **caractérisée en ce qu'**elle comprend plusieurs moyens d'obturation (27), chaque moyen d'obturation formant un bouchon qui se bloque dans une partie radiale (17B) de fente par encliquetage.

7. Machine selon l'une quelconque des revendications précédentes, **caractérisée en ce que** le moyen d'obturation (27) est réalisé en matière plastique.

8. Machine selon l'une quelconque des revendications précédentes, **caractérisée en ce que** le moyen d'obturation (27) est fixé au palier (1) par des tirants ou par des vis (29).

9. Moyen d'obturation pour une machine électrique tournante, telle qu'un alternateur de véhicule automobile, cette machine incluant un dispositif de circulation forcée (16) d'un fluide de refroidissement, un stator (3) et un rotor (4) qui sont logés dans un carter pourvu d'un palier avant et d'un palier arrière (1), l'un au moins des deux paliers (1) comprenant une face frontale (8) et une jupe (18) sensiblement cylindrique, cette jupe (18) ayant une extrémité ouverte et une extrémité fermée par la face frontale (8), des ouvertures (19) d'admission d'air frais réalisées dans la face frontale (8), des fentes (17) de refoulement d'air chaud, chaque fente de refoulement comprenant une partie axiale (17A) s'étendant dans la jupe (18) et une partie radiale (17B) s'étendant dans une zone périphérique de la face frontale (8), **caractérisé en ce qu'**il comprend au moins une extension (28) prévue pour boucher au moins une partie radiale (17B) de fente (17), chaque extension ayant une forme complémentaire d'une partie radiale (17B) de fente (17) correspondante pour s'engager dans une partie radiale (17B) de fente (17) correspondante.

## Claims

1. Electrical rotating machine, such as an alternator for a motor vehicle, this machine including a device (16) for the forced circulation of a coolant, a stator (3) and a rotor (4) which are housed in a casing provided with a front bearing and a rear bearing (1), at least one of the two bearings (1) comprising a transverse face (8) and a substantially cylindrical skirt (18), this skirt (18) having an open end and a closed end that is closed by the transverse face (8), openings (19) for the inlet of cool air, said openings being made in the transverse face (8), slots (17) for the discharge of hot air, each discharge slot comprising an axial portion (17A) extending in the skirt (18), the machine comprising a radial portion (17B) extending in a peripheral zone of the transverse face (8), and at least one closing-off means (27) which closes off at least one radial portion (17B) of slot (17), **characterized in that** the closing-off means (27) comprises at least one extension (28), each extension having a shape to complement a corresponding radial portion (17B) of slot (17) in order to be engaged in a corresponding radial portion (17B) of slot (17).

2. Machine according to Claim 1, **characterized in that** each extension (28) is of sufficient thickness to fill the radial portion (17B) of slot that it encloses over the whole thickness of this radial portion (17B) of slot, so as to constitute an internal surface of the bearing (1) that is continuous in the zone that is closed off.

3. Machine according to Claim 1 or 2, **characterized in that** at least one extension (28) of the closing-off means constitutes a lug capable of snap-fitting into a corresponding radial portion (17B) of slot (17) in order at the same time to close off this radial portion (17B) of slot and fasten the closing-off means (27) to the bearing (1).

4. Machine according to any one of the preceding claims, **characterized in that** the closing-off means (27) is formed by a ring fixed to the transverse face (8) of the bearing (1).

5. Machine according to any one of the preceding claims, comprising a cap (11) covering the bearing (1), **characterized in that** the closing-off means (27) forms part of the cap (11) that it extends.

6. Machine according to any one of the preceding claims, **characterized in that** it comprises several closing-off means (27), each closing-off means forming a plug which is immobilized in a radial portion (17B) of slot by snap-fitting.

7. Machine according to any one of the preceding claims, **characterized in that** the closing-off means (27) is made of plastic.

8. Machine according to any one of the preceding claims, **characterized in that** the closing-off means (27) is fixed to the bearing (1) by tie-rods or by screws (29).

9. Closing-off means for an electrical rotating machine, such as an alternator for a motor vehicle, this machine including a device (16) for the forced circulation of a coolant, a stator (3) and a rotor (4) which are housed in a casing provided with a front bearing and a rear bearing (1), at least one of the two bearings (1) comprising a transverse face (8) and a substantially cylindrical skirt (18), this skirt (18) having an open end and a closed end that is closed by the transverse face (8), openings (19) for the inlet of cool air, said openings being made in the transverse face (8), slots (17) for the discharge of hot air, each discharge slot comprising an axial portion (17A) extending in the skirt (18) and a radial portion (17B) extending in a peripheral zone of the transverse face (8), **characterized in that** it comprises at least one extension (28) designed to plug at least one radial portion (17B) of slot (17), each extension having a shape to complement a corresponding radial portion (17B) of slot (17) in order to be engaged in a corresponding radial portion (17B) of slot (17).

## Patentansprüche

1. Drehende elektrische Maschine, wie eine Lichtmaschine für ein Kraftfahrzeug, wobei diese Maschine eine Vorrichtung (16) zur Zwangszirkulation eines Kühlmittels, einen Stator (3) und einen Rotor (4) umfasst, die in einem Gehäuse aufgenommen sind, das mit einem vorderen Lager und einem hinteren Lager (1) versehen ist, wobei mindestens eines der beiden Lager (1) eine vordere Fläche (8) und eine im Wesentlichen zylindrische Schürze (18) umfasst, wobei diese Schürze (18) ein offenes Ende und ein durch die vordere Fläche (8) geschlossenes Ende, in der vorderen Fläche (8) ausgebildete Öffnungen (19) zum Einlass von Frischluft, Schlitze (17) zum Abführen von Warmluft aufweist, wobei jeder Abführschlitz einen axialen Teil (17A), der sich in der Schürze (18) erstreckt, umfasst, wobei die Maschine einen radialen Teil (17B), der sich in einer Umfangszone der Stirnseite (8) erstreckt, und mindestens ein Verschlussmittel (27), das mindestens einen radialen Teil (17B) des Schlitzes (17) versperrt, umfasst, **dadurch gekennzeichnet, dass** das Verschlussmittel (27) mindestens eine Erweiterung (28) umfasst, wobei jede Erweiterung zum Eingreifen in einen entsprechenden radialen Teil (17B) des Schlitzes (17) eine zu einem entsprechenden radialen Teil (17B) des Schlitzes (17) komplementäre Form aufweist.

2. Maschine nach Anspruch 1, **dadurch gekennzeichnet, dass** jede Erweiterung (28) eine Dicke aufweist, die ausreicht, den radialen Teil des Schlitzes (17B) so zu überdecken, dass sie die gesamte Dicke dieses radialen Teils des Schlitzes (17B) verschließt, um eine Innenfläche des Lagers (1) herzustellen, die in den verschlossenen Bereich weiterführt.

3. Maschine nach Anspruch 1 oder 2, **dadurch gekennzeichnet, dass** mindestens eine Erweiterung (28) des Verschlussmittels eine Nase bildet, die in einen entsprechenden radialen Teil (17B) des Schlitzes (17) einrasten kann, um gleichzeitig diesen radialen Teil (17B) des Schlitzes zu verschließen und die Befestigung des Verschlussmittels (27) am Lager (1) zu gewährleisten.

4. Maschine nach einem der vorhergehenden Ansprüche, **dadurch gekennzeichnet, dass** das Verschlussmittel (27) durch einen an der Stirnseite (8) des Lagers (1) befestigten Ring gebildet wird.

5. Maschine nach einem der vorhergehenden Ansprüche, die einen Deckel (11) umfasst, der das Lager (1) bedeckt, **dadurch gekennzeichnet, dass** das Verschlussmittel (27) Teil des Deckels (11) ist, den es verlängert.

6. Maschine nach einem der vorhergehenden Ansprüche, **dadurch gekennzeichnet, dass** sie mehrere Verschlussmittel (27) umfasst, wobei jedes Verschlussmittel einen Stopfen bildet, der sich in einem radialen Teil (17B) des Schlitzes durch Einrasten festklemmt.

7. Maschine nach einem der vorhergehenden Ansprüche, **dadurch gekennzeichnet, dass** das Verschlussmittel (27) aus Kunststoff hergestellt ist.

8. Maschine nach einem der vorhergehenden Ansprüche, **dadurch gekennzeichnet, dass** das Verschlussmittel (27) durch Zuganker oder Schrauben (29) am Lager (1) befestigt ist.

9. Verschlussmittel für eine drehende elektrische Maschine, wie eine Lichtmaschine für ein Kraftfahrzeug, wobei diese Maschine eine Vorrichtung (16) zur Zwangszirkulation eines Kühlmittels, einen Stator (3) und einen Rotor (4) umfasst, die in einem Gehäuse aufgenommen sind, das mit einem vorderen Lager und einem hinteren Lager (1) versehen ist, wobei mindestens eines der beiden Lager (1) eine vordere Fläche (8) und eine im Wesentlichen zylindrische Schürze (18) umfasst, wobei diese Schürze (18) ein offenes Ende und ein durch die vordere Fläche (8) geschlossenes Ende, in der vorderen Fläche (8) ausgebildete Öffnungen (19) zum Einlass von Frischluft, Schlitze (17) zum Abführen von Warmluft aufweist, wobei jeder Abführschlitz einen axialen Teil (17A), der sich in der Schürze (18) erstreckt, und einen radialen Teil (17B), der sich in einer Umfangszone der Stirnseite (8) erstreckt, umfasst, **dadurch gekennzeichnet, dass** es mindestens eine Erweiterung (28), die zum Versperren mindestens eines radialen Teils (17B) des Schlitzes (17) vorgesehen ist, umfasst, wobei jede Erweiterung zum Eingriff in einen entsprechenden radialen Teil (17B) des Schlitzes (17) eine zu einem entsprechenden radialen Teil (17B) des Schlitzes (17) komplementäre Form aufweist.
